# EUROPÄISCHE PATENTSCHRIFT

(11) **EP 2 086 800 B1**
(45) Veröffentlichungstag und Bekanntmachung des Hinweises auf die Patenterteilung: **13.10.2010**
(21) Anmeldenummer: 07819197.0
(22) Anmeldetag: 22.10.2007
(51) Int. Cl.: B60R 22/44, B60R 22/46

(54) **SICHERHEITSGURTAUFROLLER**
SEAT BELT RETRACTOR
ENROULEUR DE CEINTURE DE SECURITE

(30) Priorität: 24.10.2006 DE 102006050654
(43) Veröffentlichungstag der Anmeldung: 12.08.2009
(73) Patentinhaber: Autoliv Development AB, 447 83 Vårgårda (SE)
(72) Erfinder: STUMPF, Marcus, 21409 Oerzen (DE); LANGHOFF, Hans-Jörg, 25474 Bönningstedt (DE); WITTENBERG, Geert Helge, 22848 Norderstedt (DE)
(74) Vertreter: Stornebel, Kai
(86) Internationale Anmeldenummer: PCT/EP2007/009133
(87) Internationale Veröffentlichungsnummer: WO 2008/049562

(56) Entgegenhaltungen:
- EP-A- 1 238 873
- EP-A- 1 666 318
- EP-A- 1 705 081

## Beschreibung

Die Erfindung betrifft einen Sicherheitsgurtaufroller mit einer Gurtwelle, auf der ein Gurtband aufrollbar befestigt ist, einem mit der Gurtwelle gekoppelten Elektromotor, an dem eine Motorsensoreinheit angebracht ist, und einem der Gurtwelle zugeordneten Gurtwellensensor zur Erfassung der Gurtbandauszugslänge oder der Gurtwellenstellung.

Aus der DE 199 57 814 C2 ist ein Gurtaufroller für ein Insassenrückhaltesystem mit einem Rahmen und einer drehbar daran gelagerten Gurtspule bekannt. Ein Sperrmechanismus blockiert selektiv die Gurtspule, wobei dieser Sperrmechanismus durch einen Aktor betätigt wird. Ein Elektromotor treibt die Gurtspule an und ist mit einer elektronischen Steuereinheit verbunden, die eine Eingangsschnittstelle und eine Ausgangsschnittstelle aufweist, wobei ein fahrzeugsensitiver Sensor an der Eingangsstelle und der Aktor und der Elektromotor an der Außenstelle angeschlos-sen sind. Sowohl der Elektromotor als auch der Gurtaufroller weisen Sensoren auf, um die Rotorlage, die Drehrichtung und die Gurtbandsauszugslänge zu erfassen.

Die EP 1 238 873 A2 beschreibt einen Sicherheitsgurtaufroller mit einer Gurtwelle, auf der ein Gurtband aufrollbar befestigt ist. Mit der Gurtwelle ist ein Elektromotor gekoppelt, dem eine Motorscnsoreinheit angeordnet ist, die über zwei Hallsensoren verfügt. Die beiden Hallsensoren sind an dem Rotor des Motors angeordnet, so dass eine exakte Zuordnung der Gurtbandauszugslänge oder der Gurtwellenstellung nicht erfolgen kann.

Die EP 1 666 318 A1 ebenso wie die EP 1 705 081 A2 zeigen einen Gurtbandaufroller, bei dem eine Spule von einem Motor angetrieben wird und ein Gurtband aufwickelt. Die Spule ist um einen Stator herum angeordnet, so dass der einzige Hallsensor zur Ermittlung der Steuerung des Rotors auch gleichzeitig als Erfassungsmittel zur Stellung der Grurtspule dienst.

Aufgabe der vorliegenden Erfindung ist es, den Aufbau eines Sicherheitsgurtaufrollers zu vereinfachen und eine höhere Integrationsdichte zu erreichen.

Erfingdungsgemäß wird diese Aufgabe durch die Merkmale des Anspruchs 1 gelöst. Vorteilhafte Ausgestaltungen und Weiterbildungen der Erfindung sind in den Unterensprüchen gezeigt.

Der erfindungsgemäße Sicherheitsgurtaufroller mit einer Gurtwelle, auf der ein Gurtband aufrollbar befestigt ist, einen mit der Gurtwelle gekoppelten Elektromotor, an dem eine Motorsensoreinheit angebracht ist und einem Gurtwellensensor zur Erfassung der Gurtbandauszugslänge und der Gurtwellenstellung, der der Gurtwelle zugeordnet ist, sieht vor, dass der Gurtwellensensor und der Motorsensor auf einer gemeinsamen Seite des Sicherheitsgurtaufrollers angeordnet sind. Durch die Anordnung der Sensoren auf einer Seite des Sitzgurtaufrollers ist es möglich, den begrenzten Bauraum in der Montageumgebung des Sitzgurtaufrollers, beispielsweise in der B-Säule, besser zu nutzen. Da die Sensoren zum Erkennen und zur Realisierung von Zusatzfunktionen, wie der Gurtlose-Reduktion, dem Gurtparken und der out-off-Position-Erkennung benötigt werden, sollen diese Sensoren möglichst raumsparend untergebracht werden, ohne die eigentlichen Maße des Aufrollers nachteilig zu verändern, insbesondere nicht zu vergrößern. Durch die Anordnung der Sensoren auf einer gemeinsamen Seite sind eine vereinfachte Montage und Leitungszuführung bzw. Verlegung des Sicherheitsgurtaufrollers und eine erleichterte Befestigung an einer Fahrzeugstruktur möglich.

Zumindest einer der Sensoren ist als induktiver Sensor vorgesehen.

Eine elektronische Steuereinheit kann somit an dem Elektromotor und der Gurtwelle an einem gemeinsamen Halter angeordnet sein, so dass der modulare Charakter verstärkt und der Einbau des Sicherheitsgurtaufrollers vereinfacht werden kann.

Eine weitere Erhöhung der Integrationsdichte wird erzielt, wenn der Elektromotor, der Gurtwellensensor und/oder der Motorsensor eine gemeinsame Leitungsführung aufweisen, beispielsweise eine kombinierte Steckerbelegung, so dass eine Steckermontage lediglich einen Steckvorgang erfordert und damit vereinfacht durchgeführt werden kann.

Zusätzlich können fahrzeugsenitive Sensoren wie beispielsweise Geschwindigkeits-, Beschleunigungs- oder Lagesensoren, die verschiedene Werte bezüglich des Fahrzeuges erfassen, an oder in der ECU und/oder am Aufroller vorgesehen sein, die ebenfalls die vorgesehene elektrische Leitungsführung nutzen. Ebenfalls sind Entfernungssensoren darunter zu verstehen, die einen bevorstehenden Unfall erfassen können. Die Sensoren übermitteln die Daten an ein Steuergerät, an das der Gurtwellensensor und/ oder der Motorsensor ebenfalls angeschlossen sein kann.

Der Elektromotor kann über ein Getriebe mit der Gurtwelle gekoppelt sein, wobei bei einem stets mitlaufenden Motor bei einem festen Übersetzungsverhältnis die Gurtbandauszugslänge oder die Gurtwellenstellung auch aus den Motorsensordaten in der Steuereinheit errechnet werden kann. Ebenfalls ist es möglich, dass der Motor schaltbar mit der Gurtwelle gekoppelt ist, beispielsweise über eine Schaltkupplung oder eine Reibkupplung, was eine Errechnung der Gurtbandauszugslänge und der Gurtwellenstellung allein über die Motorsensordaten nicht zulässt. Bevorzugt sind die Sensoren, also der Gurtwellensensor und der Motorsensor, in einem gemeinsame Getriebegehäuse angeordnet, wobei sie darin insbesondere verclipst, eingegossen oder eingespritzt sind. Ein Sensor kann dabei als Hallsensor vorgesehen sein. Bevorzugt können die Sensoren auch integraler Bestandteil einer gedruckten Leiterplatte (PCB) sein, so dass sie gemeinsam mit den Leitern in einem Montageschritt an dem Aufroller befestigt werden können.

Die Sensoren sind vorteilhafterweise über eine gemeinsame Datenbusleitung miteinander verbunden.

Nachfolgend wird ein Ausführungsbeispiel der Erfindung anhand der beigefügten Figuren näher erläutert. Es zeigen:
- Figur 1 -: einen Sicherheitsgurtaufroller in perspektivischer Gesamtansicht;
- Figur 2 -: eine Gurtwelle mit Magnetrad und Hallsensor in Einzeldarstellung;
- Figur 3 -: ein Getriebegehäuse in Draufsicht;
- Figur 4 -: ein Getriebegehäuse in Seitenansicht; sowie
- Figur 5 -: ein Schnitt gemäß V-V der Figur 4.

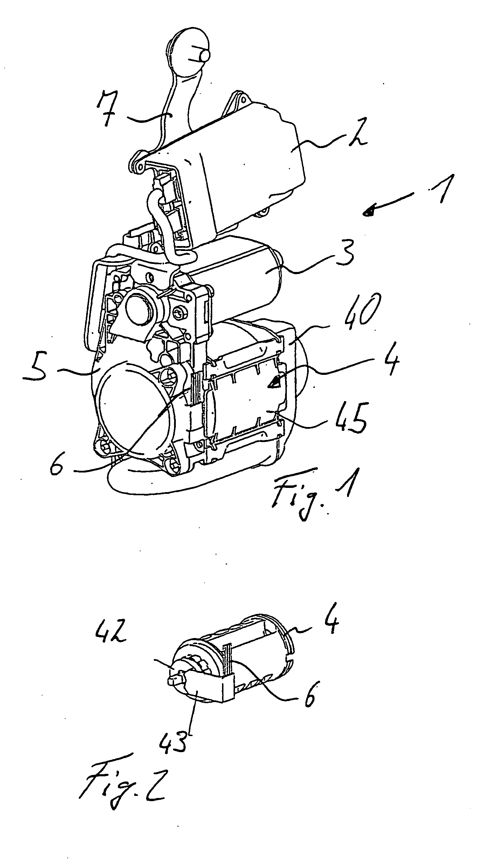

In der Figur 1 ist ein Sicherheitsgurtaufroller 1 mit einer elektrischen Steuereinheit 2, ein Elektromotor 3 und einer Gurtwelle 4 verbunden, die mit dem Elektromotor 3 über ein Getriebe gekoppelt ist. Die Gurtwelle 4 ist dabei nicht sichtbar hinter einer Wickelabdeckung 45 angeordnet. Sämtliche Komponenten sind an einem Halter 7 befestigt, so dass ein Sicherheitsgurtaufrollermodul bereitgestellt ist, das an einer Fahrzeugstruktur befestigt werden kann und lediglich mit nicht dargestellten, fahrzeugsensitiven Sensoren, beispielsweise über Steckverbindungen sowie mit einer Stromversorgung für den Elektromotor 3, verbunden werden muss. Die Verbindung mit den übrigen Sensoren kann über ein fahrzeugseitiges Steuergerät erfolgen. Die Gurtwelle 4 und der Elektromotor 3 sind im Wesentlichen parallelachsig zueinander angeordnet und weisen an einer Stirnseite ein gemeinsames Getriebegehäuse 5 auf, das einstückig ausgebildet ist und Aufnahmen für Zahnräder sowie Wellenlagerungen aufweisen kann. Die Gurtwelle 4 ist dabei in einem Gehäuse 40 angeordnet und gelagert. Innerhalb des Gehäuses 40 ist auch eine Spiralfeder 8 mit einem zentralen Federherz 81 in einer Federkassette 18 angeordnet

In der Figur 2 ist die Gurtwelle 4 ohne Gurtband in Einzeldarstellung gezeigt. An einem Gurtwellenende sind ein Magnetrad 42 und ein Hallsensor 43 angeordnet, von dem aus eine Verkabelung 6 wegführt. Diese Verkabelung 6 ist auch in der Figur 1 zu erkennen, in der deutlich wird, dass die Verkabelung des Hallsensors 43, der alternativ auch als ein induktiver Sensor ausgebildet sein kann, an oder in dem Getriebegehäuse 5 zu einem Motorsensor geführt ist. Dort kann die Verkabelung 6 mit einem Motorsensorkabel und/oder einer Stromleitung für den Elektromotor 3 vereinigt werden. Dies erhöht die Integrationsdichte und ermöglicht einen vereinfachten Zugang von einer Seite sowie eine vereinfachte Montage durch die Montage des Getriebegehäuses 5 an dem Elektromotor 3 und der Gurtwelle 4.

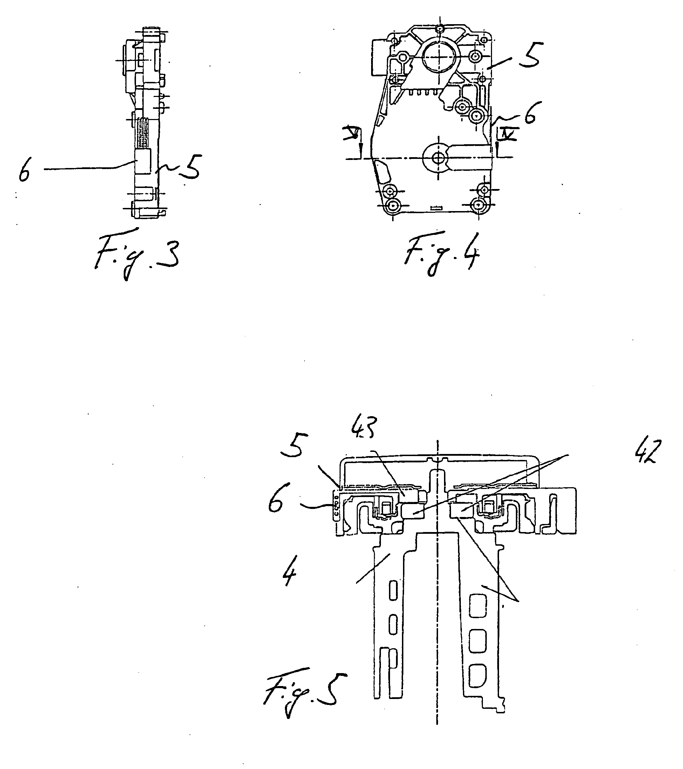

Das Getriebegehäuse 5 ist in einer Frontalansicht in der Figur 3 gezeigt, in der auch die Kabelführung 6 von dem Hallsensor 43 zu erkennen ist.

In Seitenansicht ist das Getriebegehäuse 5 in der Figur 4 gezeigt. Aus der Schnittdarstellung gemäß Figur 5 ist zu erkennen, dass die Gurtwelle 4 endseitig in dem Getriebegehäuse 5 gelagert ist. Die Gurtwelle 4 ist mit einem Magnetrad 42 verbunden, axial dahinter angeordnet ist der Hallsensor 43, der in dem Getriebegehäuse 5 eingeclipst ist. Alternativ kann der Hallsensor 43 eingegossen oder eingespritzt sein. Über das Magnetrad 42 auf der Gurtwelle 4 kann der Drehwinkel, die Drehgeschwindigkeit und die Drehrichtung über den Hallsensor 43 detektiert werden. Das Magnetrad 42 und der Sensor 43 können integriert als Baugruppe in dem Getriebegehäuse 5 untergebracht sein. Dabei können das Polrad auf der Motorwelle und das Magnetrad auf der Gurtwelle 4 unterschiedliche Teilungen aufweisen, so dass unterschiedliche Auflösungen möglich sind, je nachdem, wo die Signale aufgenommen werden.

Alternativ kann ein induktiver Sensor eine direkte Auswertung der in einer Kupplungsglocke angeordneten Zähne oder von Zählmarken an einer Kupplungsglocke, an einem Federherz oder einer Welle vornehmen. Der induktive Sensor kann als eine Alternative oder eine Ergänzung zu einem Hall-Sensor eingesetzt werden, da er unempfindlich gegenüber permanente magnetische Felder ist und kein Polrad mehr benötigt wird. Der induktive Sensor kann durch eine direkte Auswertung von Zähnen an einer Kupplungsglocke, die an der Retraktorwelle angeordnet ist, dem Federherz 81 oder an der Gurtwelle 4 oder Motorwelle die gewünschten Daten aufnehmen, die durch die Steuereinheit 2 ausgewertet werden.

Die Anschlussleitungen der Leitungsführung 6 können mit einem Stecker oder mit mehreren Steckern ausgeführt werden, wobei eine mögliche Aufteilung der Anschlussleitungen dahingehend erfolgen kann, dass die Leitungen zum Motor 3 und Motorsensoren an einem ersten Stecker und die Leitungen zu dem Gurtwellensensor an einem zweiten Stecker angeordnet sind.

## Patentansprüche

1. Sicherheitsgurtaufroller mit einer Gurtwelle (4), auf der ein Gurtband aufrollbar befestigt ist, einem mit der Gurtwelle (4) gekoppelten Elektromotor (3), an dem eine Motorsensoreinheit angeordnet ist, und einem Gurtwellensensor zur Erfassung der Gurtbandauszugslänge oder der Gurtwellenstellung, der der Gurtwelle (4) zugeordnet ist, **dadurch gekennzeichnet, dass** der Gurtwellensensor und der Motorsensor auf einer gemeinsamen Seite des Sicherheitsgurtaufrollers (1) angeordnet sind und zumindest einer der Sensoren als induktiver Sensor vorgesehen ist.

2. Sicherheitsgurtaufroller nach Anspruch 1, **dadurch gekennzeichnet, dass** eine elektronische Steuereinheit (2) zusammen mit dem Elektromotor (3) und der Gurtwelle (4) an einem gemeinsamen Halter (7) angeordnet ist.

3. Sicherheitsgurtaufroller nach Anspruch 1 oder 2, **dadurch gekennzeichnet, dass** der Elektromotor (3), der Gurtwellensensor und/oder der Motorsensor eine gemeinsame Leitungsführung (6) aufweisen.

4. Sicherheitsgurtaufroller nach einem der voranstehenden Ansprüche, **dadurch gekennzeichnet, dass** der Elektromotor (3) über ein Getriebe mit der Gurtwelle (4) gekoppelt ist und die Sensoren in einem Getriebegehäuse (5) angeordnet, insbesondere verclipst, eingegossen oder eingespritzt sind.

5. Sicherheitsgurtaufroller nach einem der voranstehenden Ansprüche, **dadurch gekennzeichnet, dass** der Elektromotor (3) schaltbar mit der Gurtwelle (4) gekoppelt ist.

6. Sicherheitsgurtaufroller nach einem der voranstehenden Ansprüche, **dadurch gekennzeichnet, dass** einer der Sensoren als Hall-Sensor (43) ausgebildet ist.

7. Sicherheitsgurtaufroller nach einem der voranstehenden Ansprüche, **dadurch gekennzeichnet, dass** die Sensoren über eine gemeinsame Datenbusleitung miteinander verbunden sind.

## Claims

1. Seat belt retractor with a belt shaft (4) on which a belt strap is fastened in a retractable manner, an electric motor (3) which is coupled to the belt shaft (4) and on which a motor sensor unit is arranged, and with a belt shaft sensor which is assigned to the belt shaft (4) and is provided for recording the belt strap extension length or the belt shaft position, **characterized in that** the belt shaft sensor and the motor sensor are arranged on a common side of the seat belt retractor (1), and at least one of the sensors is provided as an inductive sensor.

2. Seat belt retractor according to Claim 1, **characterized in that** an electronic control unit (2) is arranged together with the electric motor (3) and the belt shaft (4) on a common holder (7).

3. Seat belt retractor according to Claim 1 or 2, **characterized in that** the electric motor (3), the belt shaft sensor and/or the motor sensor have a common line guide (6).

4. Seat belt retractor according to one of the preceding claims, **characterized in that** the electric motor (3) is coupled to the belt shaft (4) via a gear mechanism, and the sensors are arranged in a gear mechanism housing (5), in particular are clipped, cast or injected therein.

5. Seat belt retractor according to one of the preceding claims, **characterized in that** the electric motor (3) is coupled switchably to the belt shaft (4).

6. Seat belt retractor according to one of the preceding claims, **characterized in that** one of the sensors is designed as a Hall sensor (43).

7. Seat belt retractor according to one of the preceding claims, **characterized in that** the sensors are connected to each other via a common data bus line.

## Revendications

1. Enrouleur de ceinture de sécurité comprenant un arbre de ceinture (4) sur lequel est fixée enroulable une sangle de ceinture, un électromoteur (3) couplé à l'arbre de ceinture (4) auquel est agencée une unité capteur de moteur, et un capteur d'arbre de ceinture qui est attribué à l'arbre de ceinture (4) pour détecter la longueur extraite de sangle de ceinture ou la position de l'arbre de ceinture, **caractérisé en ce que** le capteur d'arbre de ceinture et le capteur de moteur sont agencés sur un côté commun de l'enrouleur de ceinture de sécurité (1) et au moins l'un des capteurs est prévu en tant que capteur inductif.

2. Enrouleur de ceinture de sécurité selon la revendication 1, **caractérisé en ce qu'**une unité de commande (2) électronique est agencée ensemble avec l'électromoteur (3) et l'arbre de ceinture (4), à un support (7) commun.

3. Enrouleur de ceinture de sécurité selon la revendication 1 ou 2, **caractérisé en ce que** l'électromoteur (3), le capteur d'arbre de ceinture et/ou le capteur de moteur présentent un câblage (6) commun.

4. Enrouleur de ceinture de sécurité selon l'une des revendications précédentes, **caractérisé en ce que** l'électromoteur (3) est couplé avec l'arbre de ceinture (4) par l'intermédiaire d'une transmission et les capteurs sont agencés dans un boîtier de transmission (5), en particulier encliquetés, moulés ou injectés.

5. Enrouleur de ceinture de sécurité selon l'une des revendications précédentes, **caractérisé en ce que** l'électromoteur (3) est couplé à l'arbre de ceinture (4) de façon commutable.

6. Enrouleur de ceinture de sécurité selon l'une des revendications précédentes, **caractérisé en ce que** l'un des capteurs est formé en tant que capteur à effet Hall (43).

7. Enrouleur de ceinture de sécurité selon l'une des revendications précédentes, **caractérisé en ce que** les capteurs sont reliés ensemble par une ligne de bus de données commune.
